# EUROPEAN PATENT APPLICATION

(11) **EP 1 069 665 A2**
(43) Date of publication of application: **17.01.2001**
(21) Application number: 00305999.5
(22) Date of filing: 14.07.2000
(51) Int. Cl.: H02J 3/01

(54) **Power transmission line and method of control**

(30) Priority: 14.07.1999 GB 9916383
(71) Applicant: Equipmake Ltd., Norwich, Norfolk NR2 3RF (GB)
(72) Inventor: Foley, Ian David, Norwich, Norfolk NR2 3RF (GB)
(74) Representative: Morton, Colin David

(57) **Abstract**

A power transmission line, apparatus for and method of control thereof are provided to enable loads connected between the live and neutral conductors to be reconnected to a power supply following the occurrence of a short circuit upon the line, without the need to first repair the short circuited section of the line. The power line comprises a plurality of locations (8), each comprising a Signalling Power Management System (SPMS) unit (10) and a location transformer (12). The SPMS unit (10) comprises an impedance (18), which impedance and the location transformer (12) form a potential divider across the power supply. By comparing the voltages across the impedance (18) and the location transformer (12), a controller (28) determines whether there is a short circuit on the section of the power line downstream from the location transformer (12) as far as the next SPMS unit. Only if there is no short circuit upon this section does the controller (28) close a relay (26) in parallel with the impedance (18) such that all of the power supply voltage is dropped across the location transformer (12).

## Description

### Field of the invention

This invention concerns a method and apparatus for isolating sections of a power transmission line when a short circuit occurs at some point along the transmission line. The invention is of particular (but not exclusive) application to the power transmission lines which supply electrical power to signals and points associated with a railway track.

### Background to the invention

Conventionally, power for railway trackside signalling and operation of points is supplied from a main 415/650 V single phase supply transformer to an earth-free line pair running parallel to the railway track.

At each location where power is required for signalling or point-operating apparatus a 650/110 V local step down transformer is positioned, the primary winding of which is permanently connected to the 650 V line pair. The 110 V secondary winding provides power when required for operating the signal or points. Typically these 650/110 V transformers will be located at 1 km intervals, and a line pair may run many kilometres, but typically 8 to 10 km.

To protect against overload or short circuit conditions the line pair includes a fuse or circuit breaker in each line just downstream from the main 415/650 V supply transformer, and in the event of a short circuit condition occurring somewhere along the line pair, one or other or both of the fuses will blow or circuit breakers trip. The local transformers and apparatus linked to that line pair of 8 to 10 km will be useless until the short circuit has been repaired and the fuse(s) replaced or the circuit breakers reset.

Locating the faulty section of the line pair can take time, and this coupled with the trackside repair time to then find and replace the short circuited length of cable, means that the associated railway line can be out of action for some hours.

With this in mind systems have been proposed to try to isolate a section of the line pair between the secondary winding of the main supply transformer and the section of the line pair containing the short circuit, so that in the event of a short circuit, at least the signals and points up to that section can remain functional, and only the section of the line pair beyond the last local transformer and the short circuit will be rendered non-operational until repaired. However, previous proposals have been complex and relatively expensive and have relied on components, the failure rate of which can exceed the failure rate attributable to short circuit occurrences on the line pair itself.

It is an object of the present invention to provide a simpler method and apparatus which are not only inherently reliable but are also less expensive than previous proposals.

### Summary of the Invention

According to the first aspect of the invention there is provided apparatus for controlling a flow of current from a power supply to a load, comprising an impedance for connection in series between the power supply and the load, detector means for detecting a voltage representative of the voltage drop across the impedance, comparison means for comparing the detected voltage with a predetermined voltage and means for reducing the magnitude of the impedance to allow a flow of current to power the load if the detected voltage is below the predetermined voltage, indicating the absence of a short circuit across the load.

According to the second asppect of the invention there is provided a power transmission line comprising live and neutral conductors, wherein at each of a number of locations along the line, a load is connected between the live and neutral conductors and one of the live or neutral conductors is divided serially into upstream and downstream sections by an impedance, first detector means for detecting a voltage representative of the voltage drop across the impedance, first comparison means for comparing the detected voltage with a predetermined voltage and means for reducing the magnitude of the impedance if the detected voltage is below the predetermined voltage, indicating the absence of a short circuit across the load in that location.

The impedance may be wholly resistive, wholly inductive, wholly capacitive or any combination of these three components.

Preferably the power transmission line further comprises at each location second detector means for detecting the magnitude of the current flowing in the power transmission line, second comparison means for comparing the detected current with a predetermined current and means for increasing the magnitude of the impedance if the detected current is below the predetermined current.

The invention provides apparatus for identifying the location of, and isolating, a short circuit in a power transmission line, which apparatus is simpler than existing systems, having the impedance, detector means, comparison means and means for reducing the magnitude of the impedance in only one of either the live or neutral conductors, and is thus relatively reliable and cheap.

The power transmission line may advantageously further comprise at each location means for setting the magnitude of the impedance to a test magnitude, the first detector means detecting the voltage drop across the impedance with the magnitude thereof set to said test magnitude.

Preferably the impedance comprises a primary winding of a transformer.

Preferably the first detector means detects the voltage drop across the impedance by measuring a voltage drop across a secondary winding of said transformer, the voltage drop across the secondary winding being proportional to the voltage drop across the impedance.

The means for reducing and the means for increasing the magnitude of the impedance may advantageously comprise a switch means connected in parallel with the impedance and variable between conductive and non-conductive states in response to control signals.

Thus, when in the non-conductive state, the switch means may enter the conductive state to reduce the magnitude of the impedance, while in the conductive state, the switch means may enter the non-conductive state to increase the magnitude of the impedance.

Preferably the second detector means comprises a current transformer coupled to one of the live or neutral conductors.

The means for setting the magnitude of the impedance to a test magnitude may advantageously comprise one or more impedances which may be selectively connected across the secondary winding of the transformer, thereby to determine the magnitude of the impedance of the primary winding of said transformer.

Alternatively the means for setting the magnitude of the impedance to a test magnitude may comprise a variable impedance connected across the secondary winding of the transformer.

It is a particularly advantageous feature of the invention that the power transmission line is bidirectional such that a power supply may be connected to the upstream section, the downstream section, or both the upstream section and the downstream section. In the case where the power supply is connected to both the upstream and downstream sections, the transmission line is operable to supply current to every location transformer except for the location transformer between the impedances immediately upstream and downstream of the short circuit.

This invention also lies in the method of controlling a flow of current from a power supply to a power transmission line, comprising the steps of serially dividing the line into upstream and downstream sections with an impedance at each of a number of locations, each location further comprising a load connected between the live and neutral conductors, detecting a voltage representative of the voltage drop across the impedance, comparing the detected voltage with a predetermined voltage and reducing the magnitude of the impedance to allow a flow of current to power the load only if the detected voltage is below the predetermined voltage, indicating the absence of a short circuit across the load in that location.

Preferably the method further comprises the step of reducing the magnitude of the impedance to a magnitude comparable with the magnitude of the impedance of a primary winding of a location transformer before detecting the voltage drop across the impedance.

The invention will now be described by way of example, with reference to the accompanying drawings in which:
Figure 1 shows one of a number of locations situated on a power transmission line, the location comprising a location transformer and Signalling Power Management System (SPMS) unit,
Figure 2 shows a circuit schematic of a first embodiment of the SPMS unit,
Figure 3 shows a circuit schematic of a second embodiment of the SPMS unit,
Figure 4 shows a flow chart of the operation of the first embodiment of the SPMS unit.

In the drawing figures like components have been designated by like reference numerals.

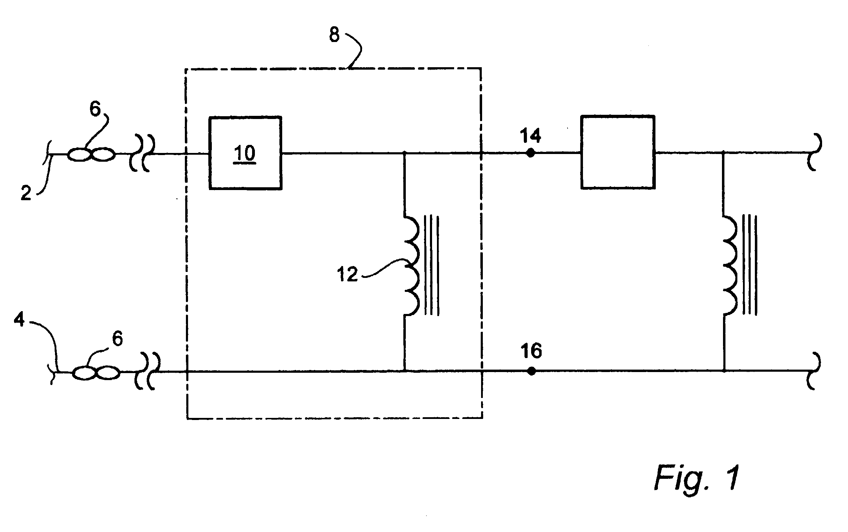

The power transmission line of Figure 1 comprises live and neutral conductors 2 and 4 respectively connected to a power supply (not shown), circuit breakers 6 and a number of locations, the first of which locations is denoted by reference numeral 8. The location 8 comprises a Signalling Power Management System (SPMS) unit 10 and a location transformer 12 for powering trackside signalling and points in a railway system. The circuit breakers 6 are operable to disconnect the locations from the power supply.

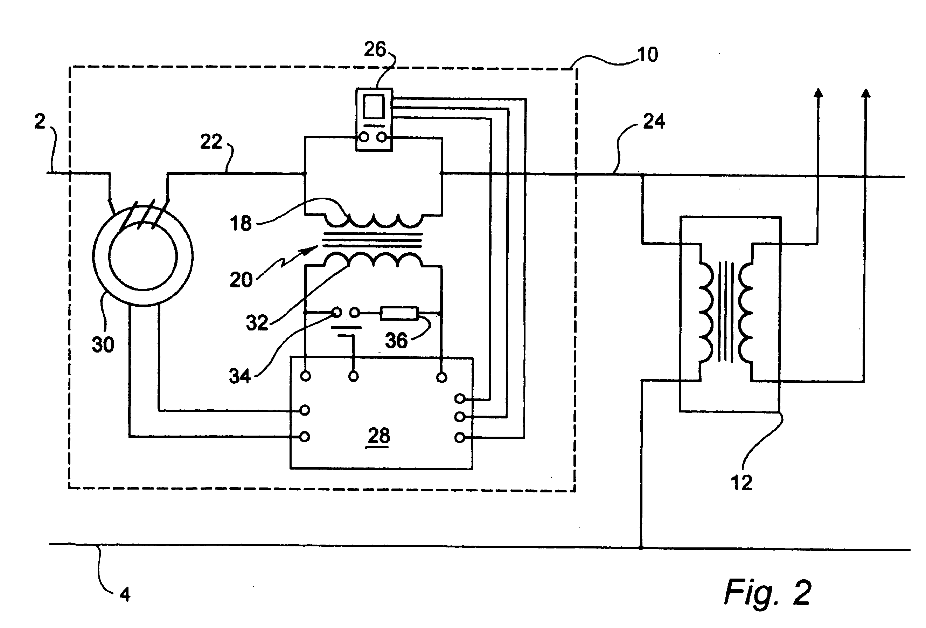

The SPMS unit of Figure 2 comprises the primary winding 18 of a transformer 20, which primary winding divides the live conductor 2 into upstream and downstream sections 22 and 24, respectively. A latching relay 26 is connected in parallel with primary winding 18, the relay 26 being opened and closed in response to signals from an analogue electronic controller 28.

A current transformer 30 coupled to the upstream section of live conductor 2 has its output connected to the controller 28. A secondary winding 32 of transformer 20 is also connected to the controller 28. A relay 34 and a resistance 36 are connected in parallel with the secondary winding 32. The relay 34 is opened and closed in response to signals from controller 28.

The operation of the SPMS unit will now be described in detail. It is initially assumed that there is no fault upon the power transmission line, that the locations are connected to the power supply, and that current is flowing in the transmission line. The latching relay 26 is therefore closed and the relay 34 is open. Current flows from the current transformer 30 to the controller 28.

If a short circuit occurs between the live and neutral conductors, for example between the points designated by reference numerals 14 and 16 in Figure 1, the circuit breakers 6 disconnect the locations from the power supply and current ceases to flow in the transmission line. The output of current transformer 30 therefore falls to zero in response to which the controller 28 opens latching relay 26.

The controller 28 comprises a capacitor (not shown) which is charged by the current from current transformer 30 while the locations are connected to the power supply. Upon disconnection of the locations from the power supply the energy stored in the capacitor is used to open the latching relay 26.

Having opened the latching relay 26, the SPMS unit waits until the circuit breakers are reset, whereupon a small current flows in the first location in the transmission line, shown in Figure 1 by reference numeral 8. The relay 34 is open, disconnecting the resistance 36 from across the secondary winding 32 of transformer 20. The inputs of the controller to which the secondary winding 32 is connected present an extremely high impedance to said secondary winding. The primary winding 18 therefore presents an extremely high impedance to the power supply.

The impedance of primary winding 18 is much larger than the impedance of the primary winding of the location transformer 12. The two windings thus form a potential divider and, the impedance of primary winding 18 being much larger than that of the location transformer primary winding, most of the power supply voltage is dropped across the primary winding 18. The voltage dropped across the second location is equal to the relatively small voltage dropped across the primary winding of transformer 12 of the first location. The voltage dropped across the third location is a fraction of said relatively small voltage dropped across the second location, and so on for subsequent locations, such that the voltages dropped across locations downstream of a location, the latching relay of which is open, are rapidly reduced to negligible levels by the aforementioned voltage divider effect.

The small current flowing in primary winding 18 and the primary winding of location transformer 12 generates a voltage across secondary winding 32 which provides a power supply for the controller 28. The controller closes relay 34 to connect the resistance 36 across the secondary winding 32. The resistance 36 is chosen such that when connected across the secondary winding 32, the primary winding 18 presents an impedance to the power supply that is of approximately equal magnitude to the magnitude of the impedance of the primary winding of location transformer 12.

The controller compares the voltage drop across the secondary winding 32, which is proportional to the voltage drop across the primary winding 18, with an internally generated reference voltage. If the voltage drop across the secondary winding 32 exceeds the reference voltage, then the voltage drop across the primary winding 18 is greater than half the power supply voltage, indicating that the short circuit is located between the first and second SPMS units. In this case the controller again opens the relay 34 to reduce the power dissipated by the SPMS unit, the relay 34 remaining open until the locations are reconnected to the power supply once the short circuit is cleared.

If, on the other hand, the voltage drop across the secondary winding 32 is less than the reference voltage, this indicates that the short circuit is located downstream of the next location. The controller therefore closes the latching relay 26 and opens the relay 34. Almost the entire power supply voltage appears across the primary winding of location transformer 12 and the SPMS unit at the second location. The SPMS unit at the second location carries out the procedure described above for the SPMS unit at the first location, and so on until the short circuit is located.

The relay 34 is opened after closing latching relay 26 to maximise the impedance of the primary winding 18. There is a finite voltage generated across the latching relay when closed and therefore a small current flows in the primary winding 18. Increasing the impedance of primary winding 18 reduces the power dissipation in the SPMS unit once the test procedure has successfully been carried out.

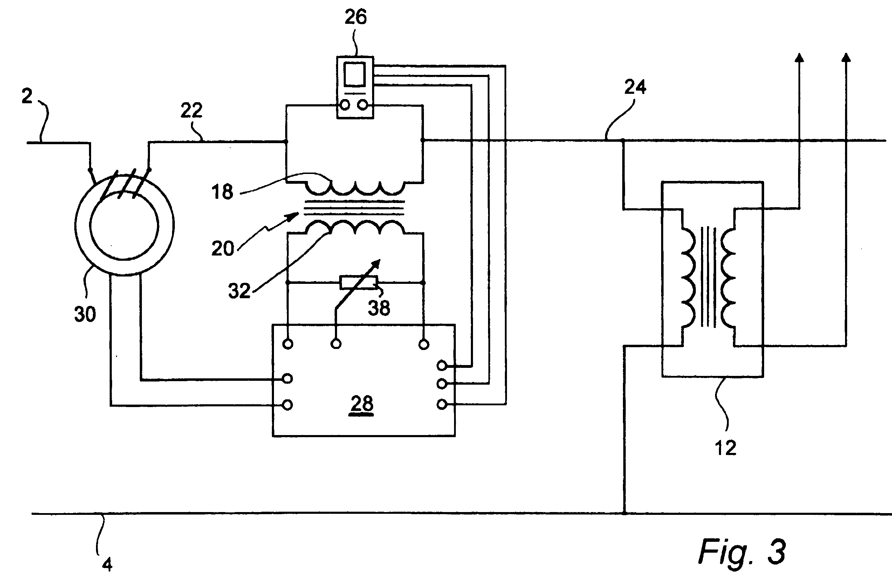

Figure 3 shows an alternative embodiment of the invention designed to deal with the different impedances that may be presented by the primary winding of a location transformer. The impedance of the primary winding of a location transformer varies according to the load upon the secondary winding of the location transformer.

The SPMS unit is identical with that shown in Figure 2 except that the relay and resistance, designated in Figure 2 by reference numerals 34 and 36 respectively, have been replaced by a variable resistance 38 which may be varied by the controller.

During normal operation of the power transmission line the resistance is varied to give a maximum resistance which minimises the power dissipation by the SPMS unit. When the locations are reconnected to the power supply following a short circuit the controller reduces the resistance until the voltage drop across the secondary winding 32 indicates that the voltage across the primary winding is approximately equal to half of the power supply voltage, whereupon the latching relay is closed and the variable resistance increased to the maximum value. If the controller is unable to reduce the resistance to a point where the voltage drop across the secondary winding indicates that the voltage across the primary winding is less than half the power supply voltage, then this is indicative that there is a short circuit between the SPMS unit in question and the next SPMS unit downstream. The variable resistance is therefore increased to the maximum value without closing the latching relay 26.

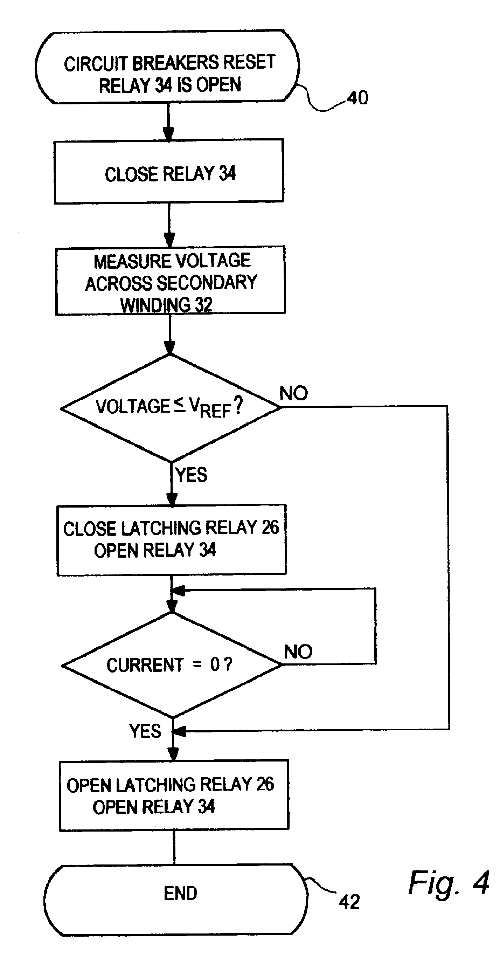

Figure 4 shows the steps carried out by the SMPS unit shown in Figure 2, from the step 40 where the circuit breakers are reset, to the waiting step 54 after the SPMS unit has detected that there is a short circuit between itself and the next SPMS unit downstream.

The SPMS units are bidirectional, such that if the power supply is connected to the other end of the power transmission line then the transmission line will still function as described above, except that the last SPMS unit will become the first and vice versa.

Furthermore, if power supplies are connected to both ends of the transmission line, the SPMS units will allow current to flow from both ends of the transmission line as far as the one unit on each side of the short circuit. The short circuit is thus isolated and the transmission line can be returned to normal use, except for the location isolated by the one unit on each side of the short circuit. The invention, in conjunction with a portable generator set, for example, makes possible substantially full use of a power transmission line on which a short circuit has occurred, without the need to first repair the short circuited section.

## Claims

1. Apparatus for controlling a flow of current from a power supply to a load, comprising an impedance for connection in series between the power supply and the load, detector means for detecting a voltage representative of the voltage drop across the impedance, comparison means for comparing the detected voltage with a predetermined voltage and means for reducing the magnitude of the impedance to allow a flow of current to power the load if the detected voltage is below the predetermined voltage, indicating the absence of a short circuit across the load.

2. A power transmission line comprising live and neutral conductors, wherein at each of a number of locations along the line, a load is connected between the live and neutral conductors and one of the live or neutral conductors is divided serially into upstream and downstream sections by an impedance, first detector means for detecting a voltage representative of the voltage drop across the impedance, first comparison means for comparing the detected voltage with a predetermined voltage and means for reducing the magnitude of the impedance if the detected voltage is below the predetermined voltage, indicating the absence of a short circuit across the load in that location.

3. A power transmission line according to claim 2, wherein the means for reducing the magnitude of the impedance comprises a switch means connected in parallel with the impedance and variable between conductive and non-conductive states in response to control signals.

4. A power transmission line according to either one of claims 2 or 3 further comprising at each location second detector means for detecting the magnitude of the current flowing in the transmission line, second comparison means for comparing the detected current with a predetermined current and means for increasing the magnitude of the impedance if the detected current is below the predetermined current.

5. A power transmission line according to claim 4, wherein the second detector means comprises a current transformer coupled to one of the live or neutral conductors.

6. A power transmission line according to any of claims 2 to 5, further comprising at each location means for setting the magnitude of the impedance to a test magnitude, the first detector means detecting the voltage drop across the impedance with the magnitude thereof set to said test magnitude.

7. A power transmission line according to any one of claims 2 to 6, wherein the impedance comprises a primary winding of a transformer.

8. A power transmission line according to claim 7 when dependent on claim 6, wherein the means for setting the magnitude of the impedance to the test magnitude comprises at least one impedance means operable to be selectively connected across a secondary winding of the transformer.

9. A power transmission line according to claim 8, wherein the impedance means comprises a variable impedance, variable in response to control signals, connected across the secondary winding of the transformer.

10. A power transmission line according to any of claims 7 to 9, wherein the first detector means is operable to detect the voltage drop across the impedance by measuring a voltage drop across the secondary winding of said transformer, the voltage drop across the secondary winding being proportional to the voltage drop across the impedance.

11. A method of controlling a flow of current from a power supply to a power transmission line, comprising the steps of serially dividing the line into upstream and downstream sections with an impedance at each of a number of locations, each location further comprising a load connected between the live and neutral conductors, detecting a voltage representative of the voltage drop across the impedance, comparing the detected voltage with a predetermined voltage and reducing the magnitude of the impedance to allow a flow of current to power the load only if the detected voltage is below the predetermined voltage, indicating the absence of a short circuit across the load in that location.

12. A method according to claim 11, further comprising the step of reducing the magnitude of the impedance to a magnitude comparable with the magnitude of the impedance of the load at that location before detecting the voltage representative of the voltage drop across the impedance.
